# EUROPÄISCHE PATENTSCHRIFT

(11) **EP 3 581 310 B1**
(45) Veröffentlichungstag und Bekanntmachung des Hinweises auf die Patenterteilung: **23.04.2025**
(21) Anmeldenummer: 19177353.0
(22) Anmeldetag: 29.05.2019
(51) Int. Cl.: B23D 55/04, B23D 53/04, B23D 53/06, B23D 55/08

(54) **SÄGEMASCHINE FÜR GEHRUNGSSCHNITTE**
MITRE CUT SAWING MACHINE
MACHINE À SCIER POUR COUPES D'ONGLET

(30) Priorität: 12.06.2018 DE 202018103299 U
(43) Veröffentlichungstag der Anmeldung: 18.12.2019
(73) Patentinhaber: KEURO Besitz GmbH & Co. EDV-Dienstleistungs KG, 77855 Achern (DE)
(72) Erfinder: Stolzer, Armin, 76530 Baden-Baden (DE); Krebber, Sönke Florian, 76530 Baden-Baden (DE)
(74) Vertreter: LBP Lemcke, Brommer & Partner Patentanwälte mbB

(56) Entgegenhaltungen:
- EP-A1- 0 491 120
- EP-A2- 0 152 237
- DE-A1- 3 916 060
- JP-A- 2002 144 144

## Beschreibung

Die Erfindung betrifft eine Sägemaschine für Gehrungsschnitte in metallischen Werkstücken nach dem Oberbegriff des Anspruchs 1. Eine solche Sägemaschine weist ein Sägenoberteil auf, in dem ein Sägeband um mindestens zwei Laufräder umläuft, von denen mindestens eines motorisch angetrieben ist. Die Sägemaschine ist außerdem mit einer Heb- und Senkvorrichtung zum Auf- und Ab-Bewegen des Sägenoberteils versehen, um das Sägeband in einer Sägevorschubbewegung in einem Sägebereich zu bewegen, d.h. eine Schnittbewegung durch ein zu sägendes Werkstück bei laufendem Sägeband zu bewirken. Die Heb- und Senkvorrichtung kann hierbei eine Vorrichtung sein, die das Sägenoberteil translatorisch auf- und abbewegt; sie kann im Rahmen der vorliegenden Erfindung jedoch auch eine Vorrichtung zum Verschwenken des Sägenoberteils um eine im Wesentlichen horizontale Achse sein, wodurch sich eine rotatorische Auf- und Ab-Bewegung des Sägebands im Sägebereich ergibt. Auch eine kombinierte Rotations- und Translationsbewegung des Sägenoberteils ist möglich.

Eine Sägemaschine der vorliegenden Art umfasst weiterhin eine Transportstrecke zum Zuführen eines zu sägenden Werkstücks zum Sägebereich, wobei die Zuführbewegung entlang dieser Transportstrecke eine Zuführrichtung definiert. Das Sägenoberteil wird von einem Gestell gehalten, und dieses Gestell ist um eine Hochachse verschwenkbar, um einen Gehrungswinkel zwischen dem Sägeband und der Zuführrichtung einzustellen. Außerdem ist ein im Sägebereich angeordneter, beweglicher Sägetisch zum Auflegen des zu sägenden Werkstücks während des Sägevorgangs sowie ein Spannstock zum Einspannen des zu sägenden Werkstücks während des Sägevorgangs vorhanden. Der Sägetisch und der Spannstock sind so ausgebildet, dass sie in und gegen die Zuführrichtung bewegbar sind. Der Sägetisch und der Spannstock sind in zwei Positionen arretierbar, von denen eine erste Position für einen Gehrungswinkel von gleich oder mehr als 0 Winkelgraden und eine zweite Position für einen Gehrungswinkel von gleich oder weniger als 0 Winkelgraden vorgesehen ist.

Bandsägemaschinen für Gehrungsschnitte sind seit langem bekannt, beispielsweise aus der DE 40 05 143 C2, und weit verbreitet. Sie ermöglichen insbesondere langgestreckte metallische Werkstücke, wie beispielsweise Doppel-T-Träger, Rohre und sonstige Profile mit einem Gehrungswinkel von nahezu - 90 Winkelgraden bis nahezu + 90 Winkelgraden abzulängen. Ein "Gehrungswinkel" von 0° entspricht hierbei einem Geradschnitt bei dem das Sägeband orthogonal zur Zuführrichtung orientiert ist.

Sowohl bei positiven als auch bei negativen Gehrungswinkeln ergeben sich geometrische Herausforderungen beim Sägen, denn das Werkstück muss möglichst nahe an der Schnittebene eingespannt werden, um einen exakt maßhaltigen Schnitt zu gewährleisten. Das Einspannen des Werkstücks muss aufgrund seiner langgestreckten Form allerdings zwischen zwei Spannbacken erfolgen, deren Spannflächen parallel zur Zuführrichtung bzw. zur Längsachse des Werkstücks verlaufen. Insbesondere bei einer Gehrungssäge wird hierfür ein Spannstock verwendet, dessen eine Spannbacke ortsfest ausgebildet ist, während die andere Spannbacke relativ zur ortsfesten Spannbacke bewegt werden kann, um das Werkstück einzuspannen oder freizugeben.

Um den Gehrungswinkel zu verstellen, ist es zweckmäßig und üblich, das Sägenoberteil um eine Hochachse zu verschwenken, welche direkt neben der ortsfesten Spannbacke oder in einer Ausnehmung derselben verläuft, durch welche das Sägeband hindurchgeführt werden kann. Der Ort, an dem das Sägeband den Sägebereich wieder verlässt, variiert bei unterschiedlichen Gehrungswinkeln jedoch, so dass die bewegliche Spannbacke des Spannstocks vor allem dann im Weg steht, wenn negative Gehrungswinkel gesägt werden sollen. Bekannte Abhilfemaßnahmen bestehen darin, den Spannstock weiter von der Sägeebene weg anzuordnen, um den Schwenkbereich der Gehrungssäge freizugeben, was wegen der elastischen Beweglichkeit von metallischen Werkstücken zu nur mäßig maßhaltigen Schnitten führen kann, oder nur die bewegliche Spannbacke wird aus dem Schwenkbereich herausgenommen, wodurch sich jedoch eine unsymmetrische Klemmkraft im Spannstock mit entsprechend resultierenden Drehmomenten und Schubkräften ergibt, was wiederum einen exakten Schnitt gefährdet, oder es wird auf die Möglichkeit eines negativen Gehrungswinkels vollständig verzichtet.

Um ein unsymmetrisches Einspannen bei einer entlang der Zuführrichtung verstellbaren beweglichen Spannbacke zu vermeiden, kann auch die ortsfeste Spannbacke in ihrer Ausdehnung entlang der Zuführrichtung verbreitert werden, so dass der Verfahrweg der beweglichen Spannbacke abgedeckt und so eine symmetrische Klemmkraft gewährleistet ist. Es hat sich jedoch herausgestellt, dass Gehrungssägen zu einem erheblichen Anteil auch für Geradschnitte eingesetzt werden. Wenn allerdings bei einem Geradschnitt ein Spannstock zum Einspannen des Werkstücks während des Sägevorgangs verwendet wird, dessen ortsfeste Spannbacke besonders breit ausgebildet ist, können Reststücke des zu sägenden Materials, deren Länge die Breite der ortsfesten Spannbacke unterschreiten, bei automatischer oder automatisierter Zuführung des Werkstücks mit mehr gesägt werden, d.h. es bleiben zwangsläufig unvorteilhaft lange Reststücke übrig.

In der EP 0 491 120 B1 ist zu dieser Problematik vorgeschlagen worden, einen Spannstock mit einer ortsfesten Spannbacke und einer entlang der Zuführrichtung verstellbaren, beweglichen Spannbacke und zusätzlich mit einem entlang der Zuführrichtung verstellbaren Sägetisch zu verwenden. Die Problematik einer schiefen, unsymmetrischen Klemmung im Spannstock beim Sägen von insbesondere flachen Gehrungswinkeln bleibt hier allerdings ungelöst.

Ausgehend von diesem Stand der Technik liegt der Erfindung die Aufgabe zugrunde, eine Sägemaschine für Gehrungsschnitte in metallischen Werkstücken der eingangs genannten Art solcherart zu verbessern, dass einerseits Geradschnitte mit nur kurzen Reststücken möglich sind, ohne andererseits Schubkräfte im Werkstück beim Einspannen in den Spannstock oder zu geringe Klemmkräfte in Kauf nehmen zu müssen, die eine exakte Maßhaltigkeit des Sägeschnitts beeinträchtigen könnten.

Gelöst ist diese Aufgabe durch eine Sägemaschine mit den Merkmalen des Anspruchs 1. Bevorzugte Ausgestaltungen und Weiterbildungen der erfindungsgemäßen Sägemaschine sind in den Ansprüchen 2 bis 14 niedergelegt.

Die erfindungsgemäße Sägemaschine, die ein Sägenoberteil mit mindestens zwei Laufrädern umfasst, von denen mindestens eines motorisch angetrieben ist, und mit einem Sägeband, das um die Laufräder umläuft, und die weiterhin eine Heb- und Senkvorrichtung zum (translatorischen und/oder rotatorischen) Aus- und Ab-Bewegen des Sägenoberteils, um das Sägeband in einer Sägevorschubbewegung in einem Sägebereich zu bewegen, eine Transportstrecke zum Zuführen eines zu sägenden Werkstücks in einer Zuführrichtung zum Sägebereich, ein Gestell, an welchem das Sägenoberteil gehalten ist und das um eine zur Zuführrichtung orthogonale Hochachse verschwenkbar ist, um einen Gehrungswinkel zwischen dem Sägeband und der Zuführrichtung einzustellen, einen im Sägebereich angeordneten, beweglichen Sägetisch zum Auflegen des zu sägenden Werkstücks während des Sägevorgags und einen Spannstock zum Einspannen des zu sägenden Werkstücks während des Sägevorgangs umfasst, wobei der Sägetisch und der Spannstock so ausgebildet sind, dass sie in und gegen die Zuführrichtung bewegbar sind, und wobei der Sägetisch und der Spannstock in zwei Positionen arretierbar sind, von denen eine erste Position für einen Gehrungswinkel von gleich oder mehr als 0 Winkelgraden und eine zweite Position für einen Gehrungswinkel von gleich oder weniger als 0 Winkelgraden vorgesehen ist, wobei der Spannstock in der ersten Position, in Zuführrichtung gesehen, vor einer Schnittebene angeordnet ist, während er in der zweiten Position, in Zuführrichtung gesehen, hinter der Schnittebene angeordnet ist. Hierbei ist der Sägetisch bevorzugt in einen beweglichen Spannstock integriert, d.h. der bewegliche Spannstock bildet auch einen Sägetisch bzw. der Sägetisch weist Spannbacken auf, um die Funktion eines Spannstocks zu übernehmen.

Die Bewegbarkeit des Spannstocks insgesamt entlang der Zuführrichtung ermöglicht, den Ort, an dem das Werkstück symmetrisch eingespannt wird, jeweils abhängig vom eingestellten Gehrungswinkel zu wählen, wobei grundsätzlich eine symmetrisch bzw. parallele Klemmung erfolgt und dennoch auch bei Geradschnitten bis auf ein vorteilhaft kurzes Reststück gesägt werden kann, da die ortsfeste Spannbacke des Spannstocks vorteilhaft schmal ausgebildet sein kann. "Ortsfest" im Sinne der Erfindung heißt im Zusammenhang mit der entsprechenden Spannbacke, dass sie keine Bewegung senkrecht zur Zuführrichtung ausführt, also bezüglich der Einspannbewegung des Spannstocks ortsfest bleibt, während damit jedoch nicht eine Fixierung entlang der Zuführrichtung gemeint ist; denn erfindungsgemäß ist der Spannstock insgesamt, also auch seine ortsfeste Spannbacke, in und gegen die Zuführrichtung bewegbar.

Der Sägetisch und der Spannstock bzw. der integrierte bewegliche Spannstock sind in zwei Positionen arretierbar, von denen eine erste Position für einen positiven Gehrungswinkel von 0 bis nahezu + 90 Winkelgraden und eine zweite Position für einen negativen Gehrungswinkel von nahezu - 90 bis 0 Winkelgraden vorgesehen ist. So kann die einfachste Art und Weise verwirklicht werden, wie ein Werkstück beim Gehrungssägen möglichst nahe an der Schnittebene eingespannt werden kann: Bei positiven Gehrungswinkeln wird der Spannstock, in Zuführrichtung gesehen, vor der Schnittebene angeordnet, während er bei negativen Gehrungswinkeln in Zuführrichtung hinter der Schnittebene angeordnet und dort arretiert wird. Hierdurch ist dann jeweils der gesamte Verschwenkbereich des Sägebands von 0° bis + 90° bzw. von 0° bis - 90° frei.

Das Integrieren des Sägetischs in einen beweglichen Spannstock erfolgt vorzugsweise so, dass der Sägetisch mit einer horizontalen Auflagefläche und einer fest mit dieser verbundenen Platte als ortsfeste Spannbacke ausgestaltet ist. Die vertikale Platte wirkt mit einer relativ zu dieser vertikalen Platte beweglichen Spannbacke zusammen, um den Spannstock zu bilden und ein Werkstück während des Sägevorgangs zu fixieren. Bevorzugt ist die bewegliche Spannbacke direkt am Sägetisch befestigt und bildet mit diesem zusammen einen Wagen als beweglichen Spannstock, der auf Gleitschienen in und gegen die Zuführrichtung bewegbar ist.

Weitere Vorteile ergeben sich, wenn nach einer bevorzugten Weiterbildung der vorliegenden Erfindung der Sägetisch beidseits seiner vertikalen Platte jeweils eine vertikale Führungsleiste als Einweisstab zur Führung des zu sägenden Werkstücks während der Zuführbewegung aufweist. Diese vertikale Führungsleiste kann hierbei nicht nur zur Führung des Werkstücks während der Zuführbewegung, sondern auch als seitliche Unterstützung des Werkstücks beim Sägen dienen, zumal das Sägeband vorzugsweise zwischen der vertikalen Platte und der jeweiligen Führungsleiste hindurchgeführt wird. Da der in einem beweglichen Spannstock integrierte Sägetisch vorzugsweise bei positiven Gehrungswinkeln vor der Schnitteben und bei negativen Gehrungswinkeln hinter der Schnittebene angeordnet ist, wirkt die vertikale Führungsleiste jeweils für den abzutrennenden Teil des Werkstücks als Gegenlager bzw. seitliche Unterstützung.

Zweckmäßigerweise sind die erste und die zweite Position des beweglichen Spannstocks, in der dieser für positive bzw. negative Gehrungswinkel arretiert werden kann, solcherart gewählt, dass sich das Sägeband im Sägebereich jeweils unmittelbar neben der vertikalen Platte, vorzugsweise zwischen der vertikalen Platte und einer daneben angeordneten vertikalen Führungsleiste, bewegt und die Hochachse, um die das Sägenoberteil verschwenkbar ist, ebenfalls unmittelbar neben der vertikalen Platte verläuft und sich somit sinnvollerweise in der Schnittebene bzw. der Ebene des Sägebands befindet.

Da es sich bei der erfindungsgemäßen Sägemaschine um eine Sägemaschine zum Sägen von metallischen Werkstücken handelt, ist es nicht zu vermeiden, dass das Sägeband am Ende des Sägevorgangs in den Sägetisch einschneidet, sofern das Sägeband auf den Sägetisch auftrifft. Neben der Tatsache, dass bei nachfolgenden Sägevorgängen ein zugeführtes Werkstück beim Zuführen an Einsägespuren im Sägetisch hängenbleiben können, und neben der Gefahr einer verstärkten Gratbildung am Werkstück wegen einer durch Einsägespuren uneben gewordenen Oberfläche des Sägetischs, ist die Notwendigkeit, einen vielfach eingesägten Sägetisch von Zeit zu Zeit ersetzen zu müssen, ein nicht zu vernachlässigender Kostenfaktor.

Zum Dämpfen dieser Zusatzkosten ist es vorteilhaft, im Rahmen der vorliegenden Erfindung in einem Bereich um die Hochachse, um welche das Sägenoberteil verschwenkt werden kann, auf dem Sägetisch bzw. in die Sägetischoberfläche integriert jeweils einen Drehteller anzubringen, der vorzugsweise mit dem Sägenoberteil mitschwenkend ausgebildet ist. Ein solcher Drehteller verhindert, dass im Bereich der Hochachse, in dem Einsägespuren auf der Sägetischoberfläche besonders dicht beieinanderliegen, relativ schnell eine großflächige Vertiefung der Sägetischoberfläche entsteht, welche das Zuführen von Werkstücken empfindlich stören könnte.

Alternativ zu den Drehtellern ist es im Rahmen der vorliegenden Erfindung bevorzugt, wenn die horizontale Auflagefläche des Sägetischs in der Zuführrichtung im Wesentlichen gleich breit ausgebildet ist wie die vertikale Platte des Sägetischs, wobei das Sägeband, in einer vertikalen Projektion, also in einer Projektion von oben auf den Sägetisch gesehen, neben der horizontalen Auflagefläche verläuft. Dies bedeutet, dass das Sägeband dann, wenn das Werkstück fertig gesägt ist, nicht auf die Oberfläche des Sägetischs auftrifft und dort dementsprechend auch keine Einsägespuren verursachen kann.

Die horizontale Auflagefläche des Sägetischs kann, wiederum in Zuführrichtung gesehen, auch solcherart schmaler ausgebildet sein als die vertikale Platte des Sägetischs, dass ermöglicht wird, am Rand der horizontalen Auflagefläche eine zusätzliche Leiste als Verschleißteil anzubringen, die in der Schnittebene liegt, d.h. das Sägeband trifft am Ende des Sägeschnitts auf diese Leiste auf. Die Leiste wird hierdurch zwar verschleißen, aber sie ist leicht und kostengünstig ersetzbar, während sie gewährleistet, dass das Werkstück beim Sägen auch in der Schnittebene aufliegt. Dies kann hinsichtlich einer unerwünschten Gratbildung vorteilhaft sein.

Im Rahmen der vorliegenden Erfindung ist es ganz besonders bevorzugt, wenn neben dem Sägetisch mindestens eine schwenkbare Schnittleiste angebracht ist - vorzugsweise beidseits des Sägetischs - wobei diese Schnittleiste zusammen mit dem Sägenoberteil um im Wesentlichen dieselbe Hochachse verschwenkbar ist. Die Schnittleiste weist eine horizontale Oberfläche auf, welche mit der horizontalen Auflagefläche des Sägetischs im Wesentlichen eine Ebene bildet, so dass im Ergebnis das Werkstück immer beidseits der Schnittebene unterstützt wird: Einerseits durch den Sägetisch und andererseits durch die schwenkbare Schnittleiste. Diese Ebene, die von der horizontalen Auflagefläche des Sägetischs und der horizontalen Oberfläche der Schnittleiste gebildet wird, ist durch eine Lücke unterbrochen, in welcher - wiederum in vertikaler Projektion gesehen - das Sägeband verläuft. Zum Ende des Sägevorgangs befindet sich das Sägeband also in dieser Lücke, so dass auch nicht zu befürchten ist, dass die Oberfläche der Schnittleiste Einsägespuren erhält. Diese Lücke weitet sich naturgemäß um so weiter auf, um so weiter das Sägenoberteil, und damit auch die Schnittleiste verschwenkt werden, d.h. um so größer der eingestellte Gehrungswinkel ist.

Auch an einer solchen Schnittleiste kann es vorteilhaft sein, eine leicht und kostengünstig auswechselbare Verschleißleiste anzubringen, die in der Schnittebene liegt, um das Werkstück während des Sägevorgangs auch an dieser Stelle zu unterstützen. Hierfür kann die Schnittleiste zweckmäßigerweise an ihrer zur horizontalen Auflagefläche des Sägetischs hin orientierten Seite, also an der zur Lücke weisenden Seite, mit einem Absatz zum Anbringen einer Verschleißleiste versehen sein.

Vorzugsweise ist eine mechanische Kopplung zwischen der Schnittleiste und dem das Sägenoberteil tragenden Gestell vorgesehen, die wahlweise aktiviert und deaktiviert werden kann. Ein einrastender Mitnehmer am Gestell, der bei einem Verstellen des Gehrungswinkels die Schnittleiste selbsttätig mitnimmt, ist hierbei bevorzugt.

Um eine definierte Position der Schnittleiste auch dann zu gewährleisten, wenn sie nicht mit dem Gestell gekoppelt ist, ist es vorteilhaft, wenn die schwenkbare Schnittleiste und/oder der Sägetisch eine Arretierungseinrichtung aufweisen, um die Schnittleiste am Sägetisch bedarfsweise zu arretieren. Dies ist besonders vorteilhaft, wenn der Sägetisch in bzw. gegen die Zuführrichtung bewegt wird, denn die Arretierung verhindert ein unkontrolliertes Verschwenken der Schnittleiste.

Wenn zwei schwenkbare Schnittleisten vorgesehen sind, deckt eine der beiden schwenkbaren Schnittleisten den Bereich der positiven Gehrungswinkel ab, während die andere der beiden Schnittleisten den Bereich der negativen Gehrungswinkel abdeckt und das Werkstück hierbei wirksam direkt neben der Schnittebene unterstützt, auch wenn sich diese bei größeren Gehrungswinkeln relativ weit vom Sägetisch entfernt. Hierdurch kann die Maßhaltigkeit des Sägeschnitts besser gewährleistet werden.

Bei Bandsägemaschinen ist es üblich und in der Regel notwendig, das Sägeband beidseits des Sägebereichs mit Bandführungen zu führen. Diese bestehen üblicherweise aus einer zangenartigen Halterung mit Gleitstücken für einen gleitenden Kontakt mit dem Sägeband. Die Bandführungen verhindern, dass das Sägeband beim Sägen wegen des Sägewiderstands um seine Längsachse verkippt. Je nach Orientierung der Laufräder im Sägenoberteil ist es auch notwendig, dass die Bandführungen das Sägeband um bis zu 90° um seine Längsachse drehen, da ansonsten die Sägezähne nicht nach unten bzw. zum Werkstück hin orientiert sind.

Aufgrund der Funktionen, die den Bandführungen zukommen, ist es im Sinne eines exakten Sägeschnitts essentiell, dass die Bandführungen so dicht wie möglich am zu sägenden Werkstück angeordnet sind. Es ist daher üblich, zumindest eine der Bandführungen an einem verstellbaren Arm anzuordnen, um diese dann verstellbare Bandführung je nach Breite des zu sägenden Werkstücks näher zur anderen Bandführung hin oder weiter von dieser weg zu verschieben.

Bei Gehrungssägen ist eine solche Verstellbarkeit des Abstands der Bandführungen auch dann sinnvoll, wenn nicht sogar notwendig, wenn die Breite der zu sägenden Werkstücke gar nicht variiert. Denn wenn mit einem Gehrungswinkel gesägt wird, verlängert sich aufgrund der geometrischen Zusammenhänge der Schnittkanal im Werkstück und somit auch die notwendige freie Länge im Sägebands im Sägebereich. Je flacher der Gehrungswinkel wird, um so weiter müssen die Bandführungen voneinander beabstandet sein.

Bei bekannten Gehrungssägen ist es nach wie vor üblich, dass beim Verstellen des Gehrungswinkels, das von Hand oder motorisch unterstützt erfolgt, auch eine verstellbare Bandführung entsprechend verstellt wird. Allerdings hat sich gezeigt, dass im täglichen Gebrauch ein Verstellen der Bandführung vergessen wird und die verstellbare Bandführung von vielen Nutzern daher auf die größtmögliche Entfernung von der anderen Bandführung gestellt wird, um auch dann kein Problem beim Sägen zu haben, wenn die Verstellung der Bandführung vergessen wird. Dies resultiert allerdings in schlechteren Ergebnissen bei der Exaktheit des Sägeschnitts.

Es ist im Rahmen der vorliegenden Erfindung daher bevorzugt, nicht nur zwei Bandführungen zum Führen des Sägebands beidseits des Sägebereichs vorzusehen, von denen mindestens eine verstellbar ist, sondern außerdem die verstellbare Bandführung motorisch auszugestalten, um eine Schnittbreite zwischen den beiden Bandführungen zu vergrößern oder zu verkleinern, und außerdem eine Steuerung für die motorische Verstellung vorzusehen, um die Schnittbreite in Abhängigkeit vom jeweils eingestellten Gehrungswinkel zu verstellen.

Bevorzugt ist hierfür im Bereich der Transportstrecke und/oder des Sägetisches eine Messvorrichtung zum Messen der Breite des zu sägenden Werkstücks angebracht, wobei die Steuerung die Schnittbreite in Abhängigkeit von der gemessenen Breite des zu sägenden Werkstücks und vom jeweils eingestellten Gehrungswinkel, unter Berücksichtigung der sich daraus ergebenden geometrischen Zusammenhänge einstellt, so dass der kleinstmögliche Abstand der beiden Bandführungen eingestellt wird. Die Messvorrichtung kann hierbei im einfachsten Fall eine Messskala zum Ablesen der Breite des zu sägenden Werkstücks sein, wobei eine Bedienperson diese Breite ablesen und in die Steuerung eingeben muss. Bei den rauen Umgebungsbedingungen innerhalb einer Sägemaschine kann dies die vorteilhafteste Ausbildung einer Messvorrichtung sein. Alternativ kann es jedoch auch zweckmäßig sein, als Messvorrichtung ein Messgerät einzusetzen, das mit der Steuerung verbunden ist und die gemessenen Messwerte automatisch in die Steuerung eingibt.

Schließlich ist es im Rahmen der Erfindung bevorzugt, wenn an der Transportstrecke Zuführ-Spannbacken vorgesehen sind, die entlang der Zuführrichtung vor und zurückbewegbar sind. Solche Zuführ-Spannbacken sind bei Bandsägemaschinen an sich seit langem bekannt; sie sorgen auch bei besonders schweren Werkstücken für eine exakte Maßhaltigkeit beim Vorschub, der letztendlich für die Maßhaltigkeit des per Sägeschnitt abzutrennenden Werkstückteils verantwortlich ist.

Im Zusammenhang mit solchen Zuführ-Spannbacken ist das erfindungsgemäße Konzept eines beweglichen Spannstocks in einer Gehrungssäge besonders vorteilhaft, denn dies ermöglicht, wie bereits erwähnt, auf der Zuführseite nur einen sehr geringen Überstand des Spannstocks bzw. des Sägetischs über die Sägeebene in Kauf nehmen zu müssen, wenn überhaupt ein Überstand vorhanden ist, und somit können die Zuführ-Spannbacken bis ganz oder fast ganz an die Sägeebene hin bewegt werden. Dies gewährleistet den großen Vorteil, dass nur sehr kurze Reststücke beim Sägen übrig bleiben.

Ein Ausführungsbeispiel für eine erfindungsgemäße Sägemaschine ist im Folgenden anhand der beigefügten Zeichnungen nähere beschrieben und erläutert. Es zeigen:
- Figur 1: eine schematische, perspektivische Ansicht einer erfindungsgemäß ausgestalteten Sägemaschine;
- Figur 2: eine schematische perspektivische Ansicht des beweglichen Spannstocks aus der Sägemaschine gemäß Figur 1;
- Figur 3: die Sägemaschine aus Figur 1 von der Rückseite, wobei das Sägenoberteil aus Darstellungsgründen weggelassen wurde;
- Figur 4: eine Darstellung wie Figur 3, jedoch mit Sägenoberteil.

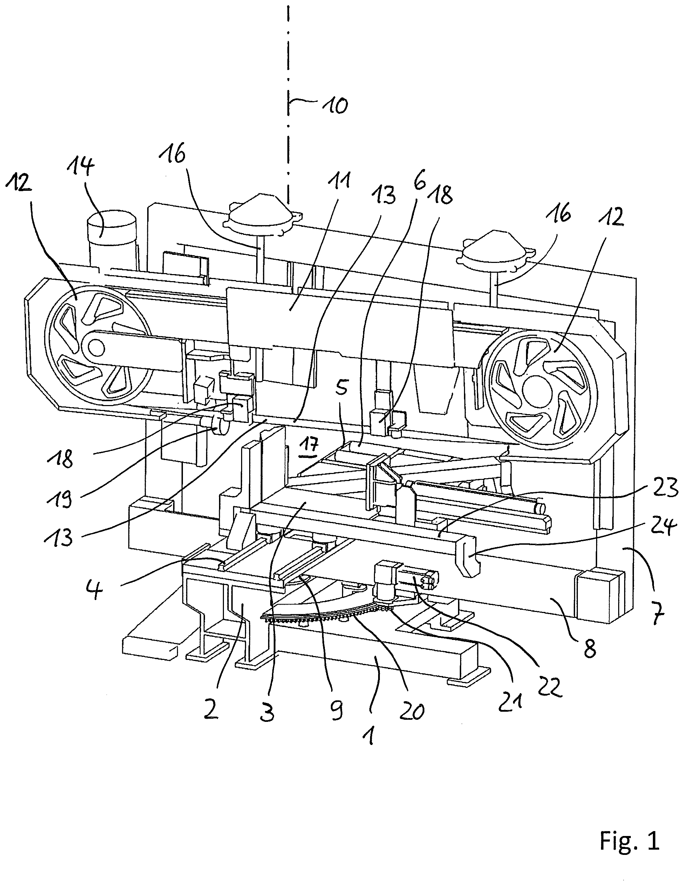

Das in Figur 1 in einer schematischen perspektivischen Darstellung gezeigte Ausführungsbeispiel einer erfindungsgemäß ausgestalteten Sägemaschine für Gehrungsschnitte in metallischen Werkstücken umfasst, neben Gehäuse und Anbauteilen, die zur besseren Verdeutlichung der Erfindung hier weggelassen wurden, eine ortsfeste Basis 1 mit einem Träger 2 für einen Sägetisch 3, der entlang von zwei Schienen 4 auf dem Träger 2 verfahrbar ist. Auf einer Zuführseite der Sägemaschine, die in der vorliegenden Darstellung hinten ist, ist als Transportstrecke 5 eine Zuführrollenbahn 6 am Träger 2 der Basis 1 befestigt.

Auf der Basis 1 ist ein Gestell 7 in Form eines Rahmens schwenkbar befestigt, wobei ein unterer Balken 8 des Gestells 7 hierfür mit einem (nicht sichtbaren) Zapfen in einem Radiallager 9 sitzt und um eine Hochachse 10 verschwenkt werden kann.

Das Gestell 7 trägt ein Sägenoberteil 11 mit zwei Laufrädern 12, um die ein Sägeband 13 endlos umläuft. Das in Figur 1 links dargestellte Laufrad 12 ist mittels eines Elektromotors 14 motorisch angetrieben, um eine Umlaufbewegung des Sägebands 13 zu bewirken.

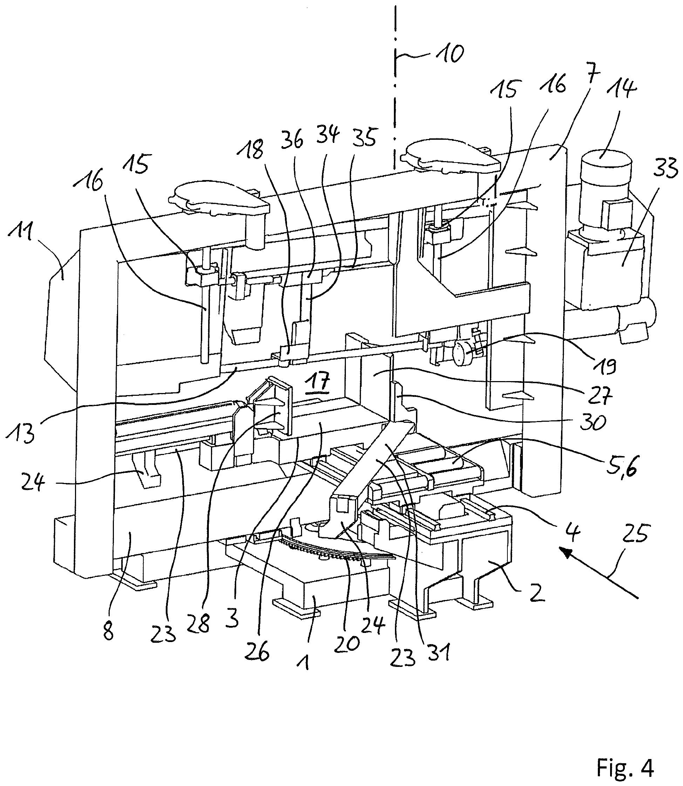

Das Sägenoberteil 11 weist außerdem eine Heb- und Senkvorrichtung 15 auf (hier verdeckt, vgl. Figur 4), mit der es an zwei Gewindespindeln 16, die fest mit dem Gestell 7 verbunden sind, angehoben und abgesenkt werden kann. Es handelt sich bei diesem Ausführungsbeispiel somit um eine rein translatorische Anhebe- und Absenkbewegung für den Sägevorschub.

Da die Laufräder 12 des Sägenoberteils 11 im vorliegenden Ausführungsbeispiel in etwa horizontal orientierte Drehachsen aufweisen, läuft das Sägeband 13 dementsprechend in einer horizontalen Orientierung um die Laufräder 12 um. Daher ist es notwendig, vor und hinter einem Sägebereich 17 je eine Bandführung 18 vorzusehen, die zangenartig ausgebildet ist und mittels Hartmetall-Gleitstücken das Sägeband 13 von einer horizontalen in eine vertikale Orientierung drehen, so dass im Sägebereich 17 die Sägezähne nach unten, zum Sägetisch 3 hin orientiert sind. Die Bandführungen 18 sorgen auch dafür, dass das Sägeband 13 im Sägebereich 17 während des Sägevorgangs nicht um seine Längsachse wegkippen kann. Die in Figur 1 rechts dargestellte Bandführung 18 ist entlang des Sägebands 13 verstellbar, was unten anhand Figur 4 näher beschrieben wird.

Eine rotierende Späneräumbürste 19 sorgt schließlich für das Beseitigen von Sägespänen, die am Sägeband 13 insbesondere im Bereich der Sägezähne anhaften.

Die Schwenkbewegung des Gestells 7, und mit diesem des Sägeoberteils 11, um die Hochachse 10 erfolgt mittels einer motorischen Gehrungswinkelverstellung. Hierzu ist die Basis 1 mit einem darauf fixierten Zahnradabschnitt 20 versehen, in welches ein Zahnrad 21 eingreift, das auf einer Welle eines am Balken 8 des Gestells 7 angebrachten Zahnradantriebs 22 sitzt.

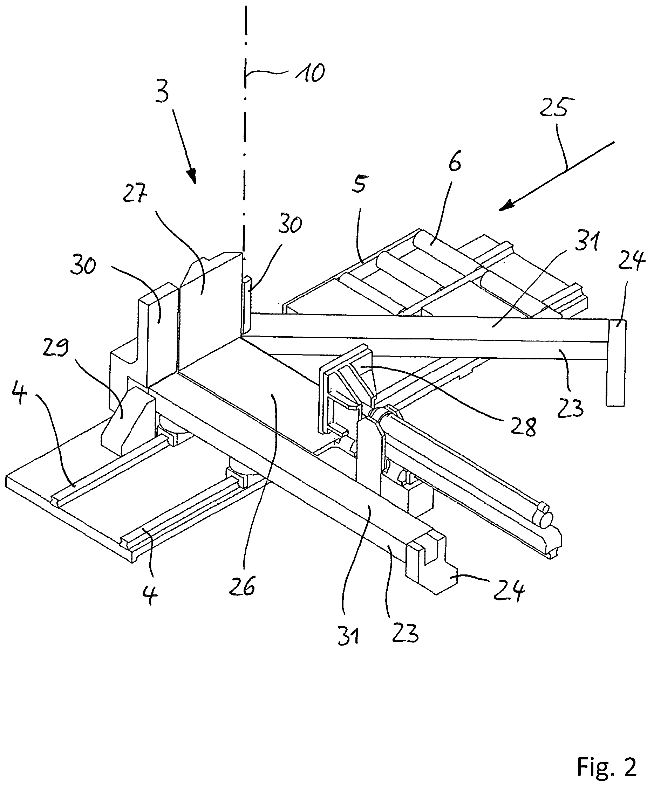

Der Sägetisch 3 wird der besseren Übersichtlichkeit halber im Zusammenhang mit Figur 2 näher beschrieben. Anhand Figur 1 bleibt lediglich zu erwähnen, dass der Sägetisch 3 mit schwenkbaren Schnittleisten 23 versehen ist, die stirnseitig je einen Mitnehmer 24 aufweisen, welcher am Balken 8 des Gestells 7 einrasten kann und von diesem beim Verschwenken des Gestells 7 mitgenommen wird, wobei seine Schwenkachse im Wesentlichen mit der Hochachse 10 übereinstimmt.

Figur 2 zeigt in einer schematischen perspektivischen Darstellung wie Figur 1, jedoch unter Weglassung etlicher Elemente, erfindungswesentliche Teile des vorliegenden Ausführungsbeispiels. Es handelt sich hier um den Sägetisch 3, der auf zwei Schienen 4 längs einer Zuführrichtung 25 verstellbar ist. Dieser Sägetisch 3 weist eine horizontale Auflagefläche 26 und eine fest mit dieser verbundene vertikale Platte 27 auf. Eine relativ zur vertikalen Platte 27 bewegliche Spannbacke 28 ist am Sägetisch 3 befestigt und bildet mit diesem zusammen, insbesondere mit der vertikalen Platte 27, einen längs der Zuführrichtung 25 beweglichen Spannstock. Ein Anschlag 29 begrenzt dessen Bewegung entlang der Schienen 4 und sichert die dargestellte Position des Sägetischs 3 gegen etwaige Kräfte, die von einem in Zuführrichtung 25 auf der Transportstrecke 5 herantransportierten Werkstück auf den Sägetisch 3 wirken können.

Die Hochachse 10, um die das Gestell 7 und mit diesem das Sägenoberteil 11 zum Einstellen eines Gehrungswinkels verschwenkbar ist, verläuft, wie in Figur 2 dargestellt, unmittelbar neben der vertikalen Platte 27, und das Sägeband 13 läuft ebenfalls durch die Hochachse 10, so dass eine Schnittebene, innerhalb der das Sägeband 13 während des Sägevorgangs läuft, unmittelbar neben der vertikalen Platte 27, und zwar in Zuführrichtung 25 gesehen, hier vor der vertikalen Platte 27 befindlich ist. Die horizontale Auflagefläche 26 des Sägetisches 3 ist in Zuführrichtung 25 gleich breit ausgebildet wie die vertikale Platte 27, so dass, wie anhand Figur 2 verdeutlicht wird, das Sägeband 13 bei einem etwaigen Geradschnitt, bei dem das Sägeband 13 senkrecht zur Zuführrichtung 25 verläuft, den Sägeschnitt neben der horizontalen Auflagefläche 26 des Sägetischs 3 beendet. Es ist also nicht zu befürchten, dass in die horizontale Auflagefläche 26 eingesägt wird.

In Zuführrichtung 25 vor und hinter der vertikalen Platte 27 sind vertikale Führungsleisten 30 vorgesehen, die zur Führung eines Werkstücks dienen; um auch flache Gehrungswinkel einstellen zu können, muss die vertikale Platte 27 mit spitzwinkligen Kanten versehen sein, und es ist zu vermeiden, dass ein Werkstück auf eine solche Kante aufläuft. Dies ist, neben der seitlichen Stützung des Werkstücks und eines von diesem abgeschnittenen Teils, eine Hauptfunktion der Führungsleisten 30.

Wie bereits anhand Figur 1 erwähnt, ist der Sägetisch 3 schließlich noch beidseits mit je einer verschwenkbaren Schnittleiste 23 versehen, die über Mitnehmer 24 zusammen mit dem Gestell 7 und somit zusammen mit dem Sägenoberteil 11 und dem Sägeband 13 verschwenkt werden kann. In der vorliegenden Figur 2 ist ein negativer Gehrungswinkel von etwa - 45° eingestellt, weswegen die (in Zuführrichtung 25 gesehen) vor dem Spannstock 27, 28 angeordnete Schnittleiste 23 um eben diese 45° verschwenkt worden ist. Das Sägeband 13 verläuft daher, ausgehend von der Hochachse 10, entlang der verschwenkten Schnittleiste 23, in vertikaler Projektion jedoch weiterhin zwischen der Schnittleiste 23 und der horizontalen Auflagefläche 26, so dass das Sägeband 13 am Ende des Sägevorgangs weder in die Auflagefläche 26 noch in eine horizontale Oberfläche 31 der Schnittleiste 23 einsägt. Gleichzeitig bilden die horizontale Oberfläche 31 der Schnittleiste 23 und die horizontale Auflagefläche 26 des Sägetischs 3 bzw. des beweglichen Spannstocks 27, 28 eine gemeinsame Auflagefläche für ein zu sägendes Werkstück, das demnach beidseits der Schnittebene unterstützt wird.

In entsprechender Weise wird bei positiven Gehrungswinkeln verfahren, wobei dann die in Zuführrichtung 25 vor dem beweglichen Spannstock 27, 28 angeordnete Schnittleiste 23 zurückgeschwenkt wird und am Sägetisch 3 anliegt, während die nach dem beweglichen Spannstock 27, 28 angeordnete Schnittleiste 23 entsprechend dem einzustellenden positiven Gehrungswinkel verschwenkt wird.

Hierzu wird dann die Position des Sägetischs 3 bzw. des beweglichen Spannstocks 27, 28 durch Verfahren entlang der Schienen 4 gegen die Zuführrichtung 25 in eine zweite Position verstellt, in der die Hochachse 10 dann auf der anderen Seite der vertikalen Platte 27, in Zuführrichtung 25 gesehen hinter der vertikalen Platte 27 und zwischen dieser und der danach folgenden Führungsleiste 30 verläuft.

Da der Sägetisch 3 dann so verstellt worden ist, dass die Sägeebene auf seiner anderen Seite verläuft, ist dann wiederum nicht mehr zu befürchten, dass das Sägeband in irgendeine Oberfläche des Sägetischs 3 einsägt; das Sägeband verläuft vielmehr, in vertikaler Projektion, innerhalb der Lücke zwischen der horizontalen Auflagefläche 26 und der Schnittleiste 23, die in Zuführrichtung 25 hinter dem beweglichen Spannstock 27, 28 angeordnet ist.

Die in Figur 2 dargestellte erste Position ist demnach für negative Gehrungswinkel vorgesehen, während eine nicht dargestellte, zweite Position für positive Gehrungswinkel gewählt wird. In beiden Fällen wird das Werkstück durch den beweglichen Spannstock 27, 28 so nahe wie möglich an der Schnittebene gehalten und symmetrisch geklemmt, ohne dass ungewollte Querkräfte oder Schubkräfte durch die Klemmung erzeugt werden.

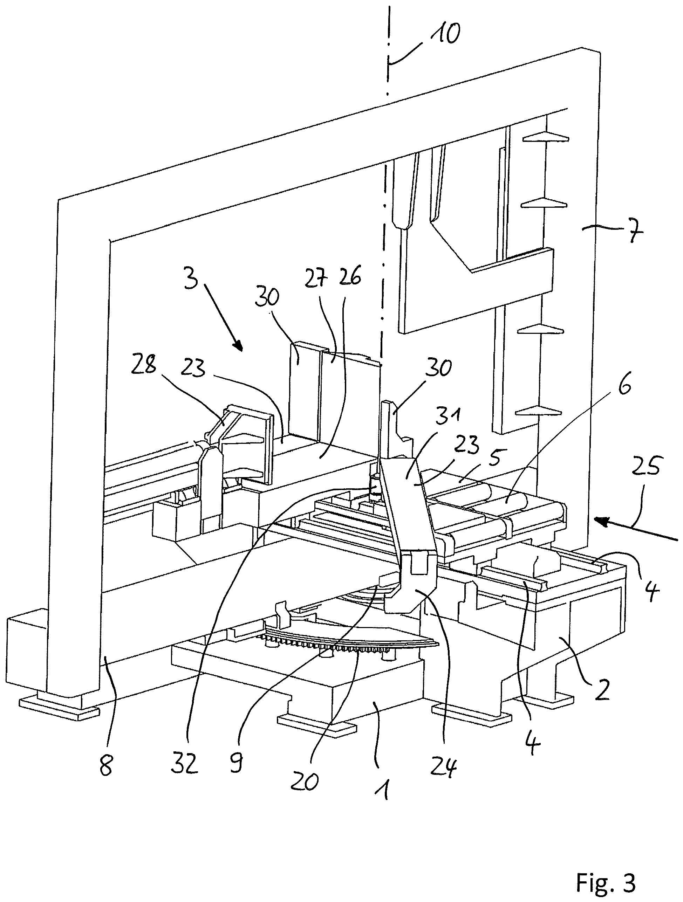

Figur 3 zeigt den Sägetisch 3 in der in Figur 2 dargestellten Einbauposition in der erfindungsgemäßen Sägemaschine, wobei gegenüber Figur 1 wiederum einige Teile weggelassen wurden, insbesondere das Sägenoberteil 11, um eine bessere Übersichtlichkeit zu gewährleisten. In allen Zeichnungen sind gleiche Teile durchgehend mit gleichen Bezugszeichen versehen, so dass ergänzend auf die Beschreibungen zu den Figuren 1 und 2 Bezug genommen wird.

In Figur 3 dargestellt ist wiederum die Basis 1 mit dem Träger 2, auf dem der Sägetisch 3, auf Schienen 4 entlang der Zuführrichtung 25 verfahrbar, gehalten ist. Die Transportstrecke 5 wird mit einer Zuführrollenbahn 6 realisiert, um Werkstücke dem Sägetisch 3 zuzuführen. Die Auflage für ein solches Werkstück wird durch die horizontale Auflagefläche 26 und die beiden horizontalen Oberflächen 31 der Schnittleisten 23 gebildet. In Figur 3 ist der Sägetisch 3, wie in Figur 2, in einer für negative Gehrungswinkel vorgesehenen Position arretiert, wobei die in Zuführrichtung 25 vorne liegende Schnittleiste 23 um einen Winkel von ca. - 45° verschwenkt ist. In dieser Darstellung ist ein Drehlager 32 sichtbar, um das die Schnittleiste 23 verschwenkt wurde, und das ebenfalls in der Hochachse 10 angeordnet ist. Die Schnittleiste 23 wird also um dieselbe Hochachse 10 und um denselben Gehrungswinkel wie das Gestell 7 verschwenkt.

In der in Figur 3 gewählten Darstellung der Sägemaschine ist allerdings kein Gehrungswinkel bzw. ein Gehrungswinkel von 0° eingestellt; d.h. das Gestell 7 ist für einen Geradschnitt angeordnet. Die verschwenkte Schnittleiste 23 ist nur aus Darstellungsgründen verschwenkt. Diese Darstellung verdeutlicht, dass etwaige (hier nicht dargestellte) Zuführ-Spannbacken bis fast an die von der Hochachse 10 markierte Sägeebene herangeführt werden können, wenn ein Geradschnitt erfolgen soll. Dies wird gewährleitet durch die besonders schmale Ausbildung der in Zuführrichtung 25 vor der Hochachse 10 bzw. der Schnittebene angeordneten Führungsleiste 30.

Die in Zuführrichtung 25 hinter dem verfahrbaren Spannstock 27, 28 angeordnete Schnittleiste 23 ist in entsprechender Weise mit einem (hier nicht sichtbaren) Drehlager verschwenkbar. Wenn der Sägetisch 3 bzw. der verstellbare Spannstock 27, 28 gegen die Zuführrichtung 25 in seine Position für positive Gehrungswinkel verfahren wird, kommt der Zwischenraum zwischen der in Zuführrichtung hinten liegenden Führungsleiste 30 und der vertikalen Platte 27 des Sägetischs 3 auf die Hochachse 10 zu liegen, so dass dann in entsprechender Weise das Drehlager der hinteren Schnittleiste 23 in der Hochachse 10 angeordnet ist und die hintere Schnittleiste 23 mit und parallel zu dem Gestell 7 verschwenkt werden kann.

Die in Figur 3 zu sehende Hälfte des Zahnradabschnitts 20 ist dementsprechend zum Einstellen eines negativen Gehrungswinkels vorgesehen.

Figur 4 zeigt das in den vorhergehenden Figuren dargestellte Ausführungsbeispiel für eine erfindungsgemäß ausgestaltete Sägemaschine im Vergleich zu Figur 1 in einer rückwärtigen Ansicht. In dieser Ansicht sind die Laufräder 12 nicht zu erkennen, jedoch der Antrieb derselben mittels eines Elektromotors 14 und eines Getriebes 33. Außerdem sind in dieser Ansicht die Heb- und Senkvorrichtung 15 und die Gewindespindeln 16 gut zu erkennen, mittels deren das Sägenoberteil 11 und mit diesem das Sägeband 13 angehoben und, für eine Sägevorschubbewegung, abgesenkt werden können. Die beiden Spindeln 16 sorgen hierbei dafür, dass das Sägeband 13 in einer translatorischen Bewegung, parallel zur horizontalen Auflagefläche 26 des Sägetischs 3, für die Sägevorschub- und Rückhohlbewegung bewegt wird.

Ebenfalls gut sichtbar ist in dieser Darstellung, dass die hier links angeordnete Bandführung 18 entlang des Sägebands 13 motorisch verstellbar ist, um eine Sägebreite bzw. eine Breite des Sägebereichs 17 einstellen zu können. Hierfür sitzt diese bewegliche Bandführung 18 auf einem Führungsarm 34, welcher seinerseits an einer Verstellspindel 35 gehalten ist und entlang dieser mittels eines Verstellmotors 36 verfahren werden kann. Eine (nicht dargestellte) Steuerung des Verstellmotors 36 sorgt dafür, dass der Führungsarm 34 und mit diesem die verstellbare Bandführung 18 in Abhängigkeit der Werkstückbreite (beispielsweise in Abhängigkeit des Abstands zwischen der vertikalen Platte 27 und der beweglichen Spannbacke 28 in geklemmtem Zustand, wofür an der beweglichen Spannbacke 28 ein Inkrementalgeber vorgesehen sein kann, um den Abstand automatisch zu messen und an die Steuerung zu melden) und vom eingestellten Gehrungswinkel einstellt, indem der optimale Abstand zwischen den beiden Bandführungen 18 gewählt wird, unter Berücksichtigung der erforderlichen Schnittbreite.

Mit der in den Figuren 1 bis 4 dargestellten Sägemaschine, die erfindungsgemäß ausgestaltet ist und ein Ausführungsbeispiel für die vorliegende Erfindung darstellt, werden die erfindungsgemäßen Vorteile erzielt, d.h. die Sägemaschine ist sowohl für Gehrungsschnitte als auch für Geradschnitte geeignet, wobei insbesondere bei letzteren bis auf eine vorteilhaft sehr geringe Reststücklänge gesägt werden kann. Ein Automatikbetrieb der Sägemaschine, d.h. eine automatische Zuführung über vor- und zurückbewegbare Zuführ-Spannbacken, ist möglich. Gleichzeitig wird das Werkstück jeweils so nahe an der Schnittebene wie möglich eingespannt, wobei dieses Einspannen immer parallel bzw. symmetrisch erfolgt und hierdurch keine unsymmetrischen Spannungen im Material oder entsprechende Schubkräfte entstehen. Hierdurch ist es auch möglich, Werkstückpakete in einem Sägevorgang zu sägen.

Ein Einsägen in den Sägetisch erfolgt nicht, obwohl die Werkstücke vorteilhafterweise sowohl vor als auch hinter der Schnittebene durch eine Auflagefläche unterstützt werden. Schließlich werden die Bandführungen abhängig vom eingestellten Gehrungswinkel jeweils optimal verstellt, um eine hohe Schnittpräzision zu gewährleisten.

### Bezugszeichenliste

- 1: Basis
- 2: Träger
- 3: Sägetisch
- 4: Schienen
- 5: Transportstecke
- 6: Zuführrollenbahn
- 7: Gestell
- 8: Balken
- 9: Radiallager
- 10: Hochachse
- 11: Sägenoberteil
- 12: Laufrad
- 13: Sägeband
- 14: Elektromotor
- 15: Heb- und Senkvorrichtung
- 16: Gewindespindel
- 17: Sägebereich
- 18: Bandführung
- 19: Späneräumbürste
- 20: Zahnradabschnitt
- 21: Zahnrad
- 22: Zahnradantrieb
- 23: Schnittleiste
- 24: Mitnehmer
- 25: Zuführrichtung
- 26: horizontale Auflagefläche
- 27: vertikale Platte
- 28: bewegliche Spannbacke
- 29: Anschlag
- 30: Führungsleiste
- 31: horizontale Oberfläche (von 23)
- 32: Drehlager
- 33: Getriebe
- 34: Führungsarm
- 35: Verstellspindel
- 36: Verstellmotor

## Patentansprüche

1. Sägemaschine für Gehrungsschnitte in metallischen Werkstücken, umfassend ein Sägenoberteil (11) mit mindestens zwei Laufrädern (12), von denen mindestens eines motorisch angetrieben ist, und mit einem Sägeband (13), das um die Laufräder (12) umläuft, weiter umfassend eine Heb- und Senkvorrichtung (15) zum Auf- und Ab-Bewegen des Sägenoberteils (11), um das Sägeband (13) in einer Sägevorschubbewegung in einem Sägebereich (17) zu bewegen, eine Transportstrecke (5) zum Zuführen eines zu sägenden Werkstücks in einer Zuführrichtung (25) zum Sägebereich (17), ein Gestell (7), an welchem das Sägenoberteil (11) gehalten ist und das um eine Hochachse (10) verschwenkbar ist, um einen Gehrungswinkel zwischen dem Sägeband (13) und der Zuführrichtung (25) einzustellen, einen im Sägebereich (17) angeordneten, beweglichen Sägetisch (3) zum Auflegen des zu sägenden Werkstücks, und einen Spannstock (27, 28) zum Einspannen des zu sägenden Werkstücks während des Sägevorgangs, wobei der Sägetisch (3) und der Spannstock (27, 28) so ausgebildet sind, dass sie in und gegen die Zuführrichtung (25) bewegbar sind,
und wobei der Sägetisch (3) und der Spannstock (27, 28) in zwei Positionen arretierbar sind, von denen eine erste Position für einen Gehrungswinkel von gleich oder mehr als 0 Winkelgraden und eine zweite Position für einen Gehrungswinkel von gleich oder weniger als 0 Winkelgraden vorgesehen ist,
**dadurch gekennzeichnet,**
**dass** der Spannstock (27, 28) in der ersten Position, in Zuführrichtung gesehen, vor einer Schnittebene angeordnet ist, während er in der zweiten Position, in Zuführrichtung gesehen, hinter der Schnittebene angeordnet ist.

2. Sägemaschine nach Anspruch 1,
wobei der Sägetisch (3) in einen beweglichen Spannstock (27, 28) integriert ist.

3. Sägemaschine nach einem der Ansprüche 1 oder 2,
wobei der Sägetisch (3) eine horizontale Auflagefläche (26) und eine fest mit dieser verbundene vertikale Platte (27) aufweist, die mit einer relativ hierzu beweglichen Spannbacke (28) zusammenwirkt, um den Spannstock (27, 28) zu bilden und ein Werkstück während des Sägevorgangs zu fixieren.

4. Sägemaschine nach Anspruch 3,
wobei die bewegliche Spannbacke (28) am Sägetisch (3) befestigt ist und mit diesem zusammen einen beweglichen Spannstock bildet, der in und gegen die Zuführrichtung (25) bewegbar ist, vorzugsweise auf Schienen (4).

5. Sägemaschine nach einem der Ansprüche 3 oder 4,
wobei der Sägetisch (3) beidseits der vertikalen Platte jeweils eine vertikale Führungsleiste (30) zur Führung des zu sägenden Werkstücks während der Zuführbewegung aufweist.

6. Sägemaschine nach mindestens einem der Ansprüche 3 bis 5,
wobei die erste und die zweite Position so gewählt sind, dass sich das Sägeband (3) im Sägebereich jeweils unmittelbar neben der vertikalen Platte (27) bewegt und die Hochachse (10), um die das Sägenoberteil (11) verschwenkbar ist, ebenfalls unmittelbar neben der vertikalen Platte (27) verläuft.

7. Sägemaschine nach Anspruch 6,
wobei der Sägetisch (3) im einem Bereich um die Hochachse (10) mit Drehtellern versehen ist, die vorzugsweise mit dem Sägenoberteil (11) mitschwenkend ausgebildet sind.

8. Sägemaschine nach Anspruch 6,
wobei die horizontale Auflagefläche (26) des Sägetischs (3) in der Zuführrichtung (25) im Wesentlichen gleich breit oder schmaler ausgebildet ist wie die vertikale Platte (27), und wobei das Sägeband (3) in einer vertikalen Projektion neben der horizontalen Auflagefläche (26) läuft.

9. Sägemaschine nach Anspruch 8,
wobei neben dem Sägetisch (3) mindestens eine schwenkbare Schnittleiste (23) angebracht ist, die zusammen mit dem Sägenoberteil (11) um im Wesentlichen dieselbe Hochachse (10) verschwenkbar ist, und die eine horizontale Oberfläche (31) aufweist, welche mit der horizontalen Auflagefläche (26) des Sägetischs (3) im Wesentlichen eine Ebene bildet, die durch eine Lücke unterbrochen ist, in welcher in vertikaler Projektion das Sägeband (13) läuft.

10. Sägemaschine nach Anspruch 9,
wobei die Schnittleiste (23) an ihrer zur horizontalen Auflagefläche (26) des Sägetischs (3) hin orientierten Seite mit einem Absatz zum Anbringen einer Verschleißleiste versehen ist.

11. Sägemaschine nach einem der Ansprüche 9 oder 10,
wobei die Schnittleiste (23) über eine mechanische Kopplung, insbesondere einen einrastenden Mitnehmer (24), mit dem Gestell (7), welches das Sägenoberteil (11) trägt, verbindbar ist.

12. Sägemaschine nach mindestens einem der Ansprüche 9 bis 11,
wobei die schwenkbare Schnittleiste (23) und/oder der Sägetisch (3) eine Arretierungseinrichtung aufweisen, um die Schnittleiste (23) am Sägetisch (3) bedarfsweise zu arretieren.

13. Sägemaschine nach mindestens einem der Ansprüche 1 bis 12,
wobei das Sägenoberteil (11) außerdem zwei Bandführungen (18) zum Führen des Sägebands (13) beidseits des Sägebereichs (17) aufweist, von denen mindestens eine motorisch verstellbar ist, um eine Schnittbreite zwischen den beiden Bandführungen (18) zu vergrößern oder zu verkleinern, und wobei eine Steuerung für die motorische Verstellung der verstellbaren Bandführung (18) vorgesehen ist, um die Schnittbreite in Abhängigkeit vom jeweils eingestellten Gehrungswinkel zu verstellen.

14. Sägemaschine nach Anspruch 13,
wobei im Bereich der Transportstrecke (5) und/oder des Sägetischs (3) eine Messvorrichtung zum Messen der Breite des zu sägenden Werkstücks angebracht ist, wobei die Steuerung die Schnittbreite in Abhängigkeit von der gemessenen Breite des zu sägenden Werkstücks und vom jeweils eingestellten Gehrungswinkel einstellt, und wobei die Messvorrichtung insbesondere eine Messskala zum Ablesen der Breite des zu sägenden Werkstücks oder vorzugsweise ein Messgerät ist, das mit der Steuerung verbunden ist und die gemessenen Messwerte automatisch in die Steuerung eingibt.

## Claims

1. Sawing machine for bevel cuts in metal workpieces, comprising an upper saw portion (11) with at least two running wheels (12), at least one of which is motor driven, and with a saw band (13) which rotates about the running wheels (12), further comprising a lifting and lowering device (15) for the upward and downward movement of the upper saw portion (11) in order to move the saw band (13) with a sawing advance movement in a sawing region (17), a transport path (5) for supplying a workpiece to be sawn in a supply direction (25) to the sawing region (17), a frame (7) on which the upper saw portion (11) is retained and which can be pivoted about a vertical axis (10) in order to adjust a bevel angle between the saw band (13) and the supply direction (25), a movable sawing table (3) which is arranged in the sawing region (17) for positioning the workpiece to be sawn, and a clamping vice (27, 28) for clamping the workpiece to be sawn during the sawing operation, wherein the sawing table (3) and the clamping vice (27, 28) are designed to be movable in and counter to the supply direction (25),
and wherein the sawing table (3) and the clamping vice (27, 28) are securable in two positions, of which the first position is provided for a bevel angle greater than or equal to 0 degrees and the second position is provided for a bevel angle less than or equal to 0 degrees,
**characterized in that**
the clamping vice (27, 28) is arranged in the first position, as seen in the supply direction, in front of a cutting plane, whereas it is arranged in the second position, as seen in the supply direction, behind the cutting plane.

2. Sawing machine according to claim 1,
wherein the sawing table (3) is integrated into a movable clamping vice (27, 28).

3. Sawing machine according to any one of claims 1 or 2,
wherein the sawing table (3) has a horizontal support face (26) and a vertical plate (27) which is securely connected thereto and which cooperates with a clamping jaw (28) that is movable relative thereto in order to form the clamping vice (27, 28) and to fix a workpiece during the sawing operation.

4. Sawing machine according to claim 3,
wherein the movable clamping jaw (28) is fastened to the sawing table (3) and forms therewith a movable clamping vice that is movable in and against the supply direction (25), preferably on rails (4).

5. Sawing machine according to any one of claims 3 or 4,
wherein the sawing table (3) has, on both sides of the vertical plate, a vertical guiding bar (30) for guiding the workpiece to be sawn during the supply movement.

6. Sawing machine according to any one of claims 3 to 5,
wherein the first and second positions are selected such that the saw band (3) moves in the sawing region directly beside the vertical plate (27) and the vertical axis (10) about which the upper saw portion (11) is pivotable also runs directly beside the vertical plate (27).

7. Sawing machine according to claim 6,
wherein the sawing table (3) is provided in a region around the vertical axis (10) with rotary plates which are preferably designed to pivot together with the upper saw portion (11).

8. Sawing machine according to claim 6,
wherein the horizontal support face (26) of the sawing table (3) is designed substantially as wide as or narrower than the vertical plate (27) in the supply direction (25), and wherein the saw band (3) runs in a vertical projection beside the horizontal support face (26).

9. Sawing machine according to claim 8,
wherein, beside the sawing table (3), at least one pivotable cutting bar (23) is fitted which is pivotable together with the upper saw portion (11) about substantially the same vertical axis (10), and which has a horizontal surface (31) that substantially forms a plane with the horizontal support face (26) of the sawing table (3), which plane is interrupted by a gap in which the saw band (13) runs in vertical projection.

10. Sawing machine according to claim 9,
wherein the cutting bar (23) is provided on its side oriented toward the horizontal support face (26) of the sawing table (3) with a shoulder for fitting a wear bar.

11. Sawing machine according to any one of claims 9 or 10,
wherein the cutting bar (23) is connectable via a mechanical coupling, in particular a latching catch (24), to the frame (7) which carries the upper saw portion (11).

12. Sawing machine according to any one of claims 9 to 11,
wherein the pivotable cutting bar (23) and/or the sawing table (3) have a securing device to secure the cutting bar (23) to the sawing table (3) as needed.

13. Sawing machine according to any one of claims 1 to 12,
wherein the upper saw portion (11) further has two band guides (18) for guiding the saw band (13) on both sides of the sawing region (17), of which at least one is motor adjustable to increase or decrease a cutting width between the two band guides (18), and wherein a controller is provided for the motor adjustment of the adjustable band guide (18) to adjust the cutting width depending on the respectively set bevel angle.

14. Sawing machine according to claim 13,
wherein in the region of the transport path (5) and/or the sawing table (3) a measuring device is fitted for measuring the width of the workpiece to be sawn, wherein the controller adjusts the cutting width depending on the measured width of the workpiece to be sawn and the respectively set bevel angle, and wherein the measuring device is in particular a measuring scale for reading the width of the workpiece to be sawn or preferably a measuring instrument that is connected to the controller and automatically inputs the measured values into the controller.

## Revendications

1. Machine à scier pour coupes d'onglet dans des pièces métalliques, comprenant une partie supérieure de scie (11) avec au moins deux roues de roulement (12), dont au moins une est entraînée de manière motorisée, et avec un ruban de scie (13) qui tourne autour des roues de roulement(12), comprenant en outre un dispositif de levage et d'abaissement (15) pour déplacer la partie supérieure de scie (11) dans un mouvement vers le haut et vers le bas pour déplacer le ruban de scie (13) dans un mouvement d'avance de scie dans une zone de sciage (17), une voie de transport (5) pour alimenter une pièce à scier dans une direction d'alimentation (25) vers la zone de sciage (17), un cadre (7) sur lequel la partie supérieure de scie (11) est maintenue et qui peut pivoter autour d'un axe vertical (10) pour définir un angle d'onglet entre le ruban de scie (13) et la direction d'alimentation (25), une table de sciage mobile (3) disposée dans la zone de sciage (17) pour poser la pièce à scier et un étau (27, 28) pour serrer la pièce à scier pendant l'opération de sciage, dans laquelle la table de sciage (3) et l'étau (27, 28) sont conçus de manière à pouvoir être déplacés dans et à l'encontre de la direction d'alimentation (25),
et dans laquelle la table de sciage (3) et l'étau (27, 28) peuvent être bloqués dans deux positions, dont une première position est prévue pour un angle d'onglet égal ou supérieur à 0 degré d'angle et une seconde position pour un angle d'onglet égal ou inférieur à 0 degré d'angle,
**caractérisée en ce que**
l'étau (27, 28) est disposé dans la première position, vue dans la direction d'alimentation, devant un plan de coupe, tandis que dans la seconde position, vue dans la direction d'alimentation, il est disposé derrière le plan de coupe.

2. Machine à scier selon la revendication 1,
dans laquelle la table de sciage (3) est intégrée dans un étau mobile (27, 28).

3. Machine à scier selon l'une quelconque des revendications 1 ou 2,
dans laquelle la table de sciage (3) présente une surface d'appui horizontale (26) et une plaque verticale (27) y étant fixée fermement, plaque qui coopère avec un mors de serrage (28) mobile par rapport à celle-ci pour former l'étau (27, 28) et fixer une pièce pendant l'opération de sciage.

4. Machine à scier selon la revendication 3,
dans laquelle le mors de serrage (28) mobile est fixé à la table de sciage (3) et forme avec celle-ci un étau mobile qui peut être déplacé dans et à l'encontre de la direction d'alimentation (25), de préférence sur des rails (4).

5. Machine à scier selon l'une quelconque des revendications 3 ou 4,
dans laquelle la table de sciage (3) présente des deux côtés de la plaque verticale respectivement une barre de guidage verticale (30) pour guider la pièce à scier pendant le mouvement d'alimentation.

6. Machine à scier selon au moins une quelconque des revendications 3 à 5,
dans laquelle la première et la seconde position sont sélectionnées de sorte que le ruban de scie (3) se déplace dans la zone de sciage respectivement directement à côté de la plaque verticale (27) et l'axe vertical (10), autour duquel la partie supérieure de scie (11) peut pivoter, s'étend également directement à côté de la plaque verticale (27).

7. Machine à scier selon la revendication 6,
dans laquelle la table de sciage (3) est pourvue, dans une zone autour de l'axe vertical (10), de plateaux rotatifs qui sont de préférence conçus pour osciller avec la partie supérieure de scie (11).

8. Machine à scier selon la revendication 6,
dans laquelle la surface d'appui horizontale (26) de la table de sciage (3) dans la direction d'alimentation (25) est conçue sensiblement aussi large ou plus étroite que la plaque verticale (27), et dans laquelle le ruban de scie (3) se déplace dans une projection verticale à côté de la surface d'appui horizontale (26).

9. Machine à scier selon la revendication 8,
dans laquelle au moins une barre de coupe pivotante (23) est placée à côté de la table de sciage (3), barre qui peut pivoter avec la partie supérieure de scie (11) autour sensiblement du même axe vertical (10), et qui présente une surface horizontale (31) qui forme sensiblement un plan avec la surface d'appui horizontale (26) de la table de sciage (3), plan qui est interrompu par un espace dans lequel le ruban de scie (13) se déplace en projection verticale.

10. Machine à scier selon la revendication 9,
dans laquelle la barre de coupe (23) est pourvue, sur son côté orienté vers la surface d'appui horizontale (26) de la table de sciage (3), d'un épaulement pour appliquer une barre d'usure.

11. Machine à scier selon l'une quelconque des revendications 9 ou 10,
dans laquelle la barre de coupe (23) peut être reliée au cadre (7) qui porte la partie supérieure de scie (11) par un couplage mécanique, en particulier un entraîneur (24) à enclenchement.

12. Machine à scier quelconque selon au moins une quelconque des revendications 9 à 11,
dans laquelle la barre de coupe pivotante (23) et/ou la table de sciage (3) présentent un appareil de blocage pour bloquer la barre de coupe (23) sur la table de sciage (3) en cas de besoin.

13. Machine à scier selon au moins une quelconque des revendications 1 à 12,
dans laquelle la partie supérieure de scie (11) présente en outre deux guide-rubans (18) pour guider le ruban de scie (13) des deux côtés de la zone de sciage (17), dont au moins l'un est réglable de manière motorisée pour augmenter ou diminuer une largeur de coupe entre les deux guide-rubans (18), et dans laquelle un dispositif de commande est prévu pour le réglage motorisé du guide-ruban réglable (18) pour régler la largeur de coupe en fonction de l'angle d'onglet respectivement défini.

14. Machine à scier selon la revendication 13,
dans laquelle un dispositif de mesure pour mesurer la largeur de la pièce à scier est appliqué au niveau de la voie de transport (5) et/ou de la table de sciage (3), dans laquelle le dispositif de commande définit la largeur de coupe en fonction de la largeur mesurée de la pièce à scier et de l'angle d'onglet respectivement défini, et dans laquelle le dispositif de mesure est en particulier une échelle de mesure pour lire la largeur de la pièce à scier ou, de préférence, un appareil de mesure qui est relié au dispositif de commande et qui entre automatiquement les valeurs de mesure mesurées dans le dispositif de commande.
